# FASCICULE DE BREVET EUROPEEN

(11) **EP 1 483 101 B1**
(45) Date de publication et mention de la délivrance du brevet: **20.10.2010**
(21) Numéro de dépôt: 03743355.4
(22) Date de dépôt: 28.02.2003
(51) Int. Cl.: B29C 63/10, B29C 65/14, F16L 9/12, B29C 65/16

(54) **PROCEDE D'ASSEMBLAGE ET TUBE COMPOSITE EN MATIERE PLASTIQUE**
MONTAGEVERFAHREN UND KUNSTSTOFFVERBUNDROHR
ASSEMBLY METHOD AND A PLASTIC COMPOSITE TUBE

(30) Priorité: 04.03.2002 FR 0202732
(43) Date de publication de la demande: 08.12.2004
(60) Demande divisionnaire: 07011636.3
(73) Titulaire: egeplast Werner Strumann GmbH & Co. KG, 48268 Greven (DE)
(72) Inventeur: MATZ, Pierre, B-1457 Nil Saint-Vincent (BE); BEULLEKENS, Frederic, B-1330 Rixensart (BE); DEHENNAU, Claude, B-1410 Waterloo (BE)
(74) Mandataire: Fritz & Brandenburg Patentanwälte
(86) Numéro de dépôt international: PCT/EP2003/002073
(87) Numéro de publication internationale: WO 2003/074258

(56) Documents cités:
- EP-A- 0 337 776
- EP-B- 0 904 441
- DE-A- 19 954 440
- GB-A- 2 103 147
- GB-A- 2 276 584

## Description

La présente invention concerne un procédé pour assembler des bandes multicouches en matière plastique à l'aide d'un rayonnement électromagnétique.

Pour des applications diverses, on cherche souvent à produire un assemblage en matière plastique qui améliore les propriétés de résistance mécanique des composants de l'assemblage.

Il est par exemple connu de réaliser des structures composites en matière plastique de haute rigidité et de haute résistance mécanique par assemblage d' éléments en matière plastique orientée selon la technique du soudage. On peut notamment comprimer des empilements de fibres en matière plastique orientée maintenues à une température proche de leur température de fusion de manière à maintenir en contact intime les parties superficielles fondues et réaliser leur assemblage par soudage.

Ce procédé est toutefois long à mettre en oeuvre et difficile à contrôler. Il n'est vraiment utilisable que lorsqu'il s'agit d'assembler des éléments compacts en matière plastique (demande de brevet GB-A-2 253 420).

On connaît aussi par le brevet européen EP-B1-0 904 441 un procédé de réalisation de grilles formées de deux réseaux de bandes parallèles en matière plastique orientée, soudés au laser infrarouge, les deux réseaux de bandes faisant entre eux un angle proche de 90 °. Chaque bande est une structure à deux couches comprenant une couche transparente au rayonnement infrarouge et une couche chargée en noir de carbone qui absorbe le rayonnement.

Ce procédé fournit toutefois une structure qui reste souple et ne convient pas pour la réalisation de corps creux devant résister à la pression.

Par le document GB-A-2 276 584 on connaît un procédé d'assemblage de plusieurs bandes monocouches sur un support, comprenant le soudage des bandes à l'aide d'un rayonnement électromagnétique, chaque bande comprenant une couche en matière plastique, orientée dans au moins une direction, et transparente à ce rayonnement. Dans ce procédé connu une face d'au moins une bande de l'assemblage est soudée sur le support préformé en matière plastique. Dans la région de surface du support préformé il se trouve une couche absorbant partiellement l'énergie transportée par le rayonnement. Le procédé connu est donc limité aux applications techniques, où le support préformé à renforcer contient une matière absorbante dans la région de surface.

L'invention a pour but de fournir un procédé qui ne présente pas les inconvénients des procédés connus et qui convienne pour la réalisation de corps creux étanches capables de résister à la pression.

Un autre but de l'invention est de facilité les opérations d'assemblage lorsqu'elles sont effectuées par la technique du soudage.

A cet effet l'invention concerne un procédé d'assemblage de bandes multicouches, comprenant le soudage des bandes à l'aide d'un rayonnement électromagnétique, les bandes comprenant au moins une couche en matière plastique, orientée dans au moins une direction, et transparente à ce rayonnement et au moins une couche absorbant partiellement l'énergie transportée par ce rayonnement, selon lequel une face d'au moins une bande de l'assemblage est soudée sur un support préformé en matière plastique.

Par procédé d'assemblage des bandes, on entend désigner un procédé qui associe les bandes entre elles et le support préformé afin qu'ils se comportent, du point de vue de leurs caractéristiques mécaniques, comme s'ils ne formaient plus qu'un corps unique.

Le procédé selon l'invention s'adresse à des bandes multicouches, c'est-à-dire à des bandes formées par la superposition d'au moins deux couches de composition distincte.

Dans ce procédé, l'assemblage est effectué par soudage des bandes les unes sur les autres et sur le support préformé. Par soudage, on désigne la technique d'assemblage qui consiste à fondre de la matière sur une faible profondeur de la surface des bandes à assembler, puis à presser les bandes ensemble et sur le support de manière telle que les surfaces fondues se touchent et que la matière en fusion qui les compose s'interpénètre.

Selon l'invention, la fusion est obtenue par illumination de la surface des bandes à souder au moyen d'un rayonnement énergétique.

Dans le procédé conforme à l'invention, ce rayonnement énergétique est un rayonnement électromagnétique. L'illumination peut se faire après pose de chaque couche individuelle de bandes, pendant l'opération d'enroulage ou après que celle-ci soit achevée sur toute la longueur du tube. Elle peut aussi se faire en une seule étape, après pose de toutes les couches de bandes, simultanément à l'opération d'enroulage de la dernière bande ou, au contraire, après que la dernière couche de bandes ait été posée sur la totalité de la longueur du tube.

La matière des bandes du procédé selon l'invention est constituée de matière plastique. Par matière plastique, on entend désigner toute matière comprenant au moins un polymère en résine de synthèse.

Comme matière plastique, peuvent convenir tous les types de matière thermoplastique.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition convient. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques.

Les polyoléfines ont donné de bons résultats. Parmi les polyoléfines, le polyéthylène de haute densité (PEHD) est préféré.

Dans le procédé d'assemblage selon l'invention, on met en oeuvre des bandes en matière plastique qui ont une structure multicouche. De préférence, elles comprennent au moins une couche orientée. Par couche orientée, on entend une couche de matière plastique dont au moins 20 % en poids des chaînes moléculaires des polymères qui interviennent dans sa composition sont disposées dans au moins une même direction. Les couches orientées peuvent l'être dans plusieurs directions distinctes: Chacune des bandes peut ainsi comprendre des couches orientées simultanément dans plus d'une direction. Les bandes peuvent aussi, en variante, comprendre des couches orientées chacune dans une seule direction, différente pour chaque bande. De manière plus préférée, les couches orientées des bandes sont orientées dans une seule et même direction.

Selon l'invention, au moins une couche orientée des bandes mises en oeuvre dans le procédé est transparente au rayonnement électromagnétique employé pour la soudure. Par le vocable "transparente", on désigne une couche qui n'absorbe pas plus de 100 J/g de matière de la couche transparente.

Dans le procédé conforme à l'invention, les bandes mises en oeuvre comprennent aussi au moins une couche absorbant partiellement l'énergie transportée par le rayonnement électromagnétique. Par absorption partielle, on désigne une absorption de l'énergie du rayonnement qui n'est pas inférieure à 300 J/g de matière de la couche absorbante.

Selon l'invention, une face d'au moins une bande de l'assemblage est en outre soudée sur un support en matière plastique. La matière plastique du support peut être identique à celle de la couche transparente des bandes. Elle peut aussi, au contraire, constituer une matière plastique de nature différente de celle de la couche transparente des bandes.

De préférence, la soudure d'une face d'au moins une bande de l'assemblage est réalisée suivant la même technique de soudage au rayonnement électromagnétique que celle employée pour souder les bandes entre elles.

Le support en matière plastique sur lequel sont soudées les bandes peut être indifféremment de structure orientée ou non orientée.

De préférence, la structure du support en matière plastique n'est pas orientée.

Le nombre de bandes que l'on peut souder dans le procédé conforme à l'invention pour constituer l'assemblage peut varier dans de larges limites. On préfère généralement souder un nombre pair de bandes. En particulier, des résultats intéressants ont été obtenus lorsqu'on soude au moins deux bandes. Particulièrement intéressants sont les résultats obtenus lorsqu'on soude au moins quatre bandes. De préférence, on soude au plus huit bandes.

Selon un mode de réalisation préféré du procédé selon l'invention, le rayonnement électromagnétique utilisé a une longueur d'onde d'au moins 700 nm. De même, on préfère utiliser un rayonnement électromagnétique dont la longueur d'onde est au plus dé 1200 nm.

De manière particulièrement préférée, le rayonnement électromagnétique est un rayonnement infrarouge. Une source IR à spectre continu sur l'ensemble de la gamme de fréquences émises peut convenir, en particulier les.sources émettant principalement dans la gamme des longueurs d'onde non absorbées par les couches transparentes des bandes. De telles sources IR sont par exemple celles à très courte longueur d'onde, telles que celles émettant aux environs de 1000 nm.

Les meilleurs résultats ont été obtenus avec un rayonnement infrarouge cohérent de type laser. Des exemples de sources d'un tel rayonnement sont les lasers à diode et les lasers Nd:YAG (laser à grenat d'aluminate d'yttrium dopé au néodyme).

Selon un mode de réalisation particulièrement intéressant du procédé conforme à l'invention, les bandes sont enroulées et soudées autour d'un support de forme tubulaire. Le résultat obtenu par le procédé d'assemblage est dans ce cas un tube renforcé par au moins une couche de bandes en matière plastique orientée.

Le support tubulaire est généralement en matière plastique. La nature de cette matière plastique est choisie parmi celles qui sont compatibles au soudage avec la matière plastique des couches absorbantes des bandes. Avantageusement, on peut choisir une matière plastique non orientée pour le support tubulaire.

Dans le procédé conforme à l'invention, la nature de la matière responsable de l'absorption du rayonnement peut être diverse. Elle est choisie parmi les compositions qui sont aptes à se mélanger aisément à la matière plastique des couches absorbantes dans lesquelles ces compositions sont incorporées. De bons résultats ont été obtenus avec du noir de carbone. De préférence, l'absorption du rayonnement électromagnétique n'est pas totale. Par ailleurs, un taux d'absorption suffisant pour dégager de la chaleur doit être respecté. En pratique, des taux d'absorption d'au moins 300 J/g de matière de la couche absorbante ont donné de bons résultats.

Une forme de réalisation intéressante du procédé selon l'invention, compatible avec les formes de réalisation décrites ci-dessus consiste à réaliser un tube dont les bandes enroulées et soudées à sa périphérie extérieure présentent un angle par rapport à la direction du tube allant de 40 à 70 ° d'angle. D'excellents résultats ont été obtenus lorsque cet angle est proche de 55 ° d'angle. On s'arrange en outre pour que chaque épaisseur de bande soudée sur l'épaisseur précédente soit croisée avec cette dernière. En pratique, de bons résultats ont été obtenus lorsque l'angle par rapport à la direction du tube est l'opposé de celui de l'épaisseur de bande précédente.

L'invention concerne aussi un tube composite en matière plastique comprenant une âme en matière plastique non orientée, sur laquelle est soudée au moins deux épaisseurs adjacentes de bandes multicouches enroulées et soudées entre elles, selon lequel au moins une couche de chaque bande est constituée d'une matière plastique transparente aux rayonnements électromagnétiques et orientée dans au moins une direction et selon lequel au moins une autre couche de chaque bande comprend une matière absorbant ces rayonnements électromagnétiques.

De préférence, les épaisseurs adjacentes de bandes sont croisées, c'est-à-dire qu'elles sont disposées de manière à former entre elles un angle allant de 80 à 140 ° d'angle.

Les termes particuliers définis plus haut dans le cas du procédé conforme à l'invention ont ici la même signification pour le tube composite. Les différentes variantes du procédé décrites plus haut peuvent aussi se retrouver dans le tube composite conforme à l'invention.

De préférence, les couches des bandes comprenant de la matière absorbante sont orientées au même titre que les couches transparentes. L'orientation peut être totalement indépendante de celle des couches transparentes. Alternativement, on préfère que l'orientation des couches absorbantes soit disposée dans la même direction que celle des couches transparentes.

Une forme de réalisation particulière du tube selon l'invention comporte des bandes constituées d'une seule couche de matière orientée transparente située entre deux couches plus minces comprenant la même matière plastique, orientée dans la même direction, que la couche transparente et comprenant en outre une matière absorbant ce rayonnement Dans cette forme de réalisation, la couche transparente de chacune des bandes présente avantageusement une absorption des rayonnements électromagnétiques de longueur d'onde allant de 700 à 1200 nm qui ne dépasse pas 100 J/g de matière de la couche transparente.

Les exemples qui suivent sont donnés en vue d'illustrer l'invention, sans en limiter en aucune manière la portée.

On a tout d'abord réalisé une bande bicouche par coextrusion dans une filière plate de 400 mm de large et de 5 mm d'ouverture alimentée par un feedblock en demi-lune connecté à deux extrudeuses, la première de 60 mm de diamètre, à fourreau rainuré et vis d'extrusion barrière tournant à 50 t/m et débitant à 50 kg/h un polyéthylène haute densité de SOLVAY POLYOLEFIN EUROPE de marque ELIEX^{®} PE 100 TUB 121 identique à la résine commerciale hormis l'absence de pigment pour la couche transparente et la deuxième de 30 mm de diamètre, munie d'une vis pour polyoléfine tournant à 10 t/m et débitant 0,5 kg/h pour la couche absorbante. La résine utilisée dans la deuxième extrudeuse pour la couche absorbante a été la résine commerciale ELTEX^{®} PE 100 TUB 121 qui comprend une charge de noir de carbone.

La feuille bicouche sortant de la filière est ensuite passée dans une calandre lisseuse à 50 °C et a été transformée en bande orientée par conditionnement thermique à 115 °C en passant sur un groupe de six cylindres de conditionnement suivi d'un étirage en deux passes successives dans un train d'étirage dont les cylindres évoluent à vitesse croissante (680 % d'étirage en première passe et 30 % en seconde passe). La bande orientée a ensuite été refroidie et a subi un léger retrait de l'ordre de 10 % dans le sens longitudinal.

Les bandes orientées ont ensuite été enroulées manuellement sur une âme tubulaire en polyéthylène haute densité ELTEX^{®} PE 100 TUB 121 de 50 mm de diamètre extérieur et de 3,2 mm d'épaisseur de telle manière à croiser deux épaisseurs successives selon un angle de + 55 ° et de - 55 ° par rapport à l'axe du tube, la couche chargée en noir de carbone étant dirigée vers le tube.

On a ensuite enroulé les bandes sur la totalité de la surface extérieure du tube, après quoi le soudage de ces bandes entre elles et sur le tube a été effectué par balayage de la totalité de la surface de ce tube portant les bandes enroulées au moyen d'une source laser à diode de marque COHERENT^{®} de 30 W de puissance et de 800 nm de longueur d'onde dont le faisceau a été collimaté à 8 mm de diamètre. La vitesse linéaire de soudage et d'avancement du tube dans le faisceau laser a été de 0,72 m/min.

La résistance à l'éclatement du tube obtenu a ensuite été comparée à celle d'un tube identique n'ayant pas subi la dernière opération de soudage des bandes à l'aide du rayonnement laser. Les résultats obtenus ont été les suivants :

| | Bandes soudées | Bandes posées, non soudées |
|---|---|---|
| Pression d'éclatement, bar | 120 | 80 |

On voit que le soudage des bandes a apporté un supplément de résistance à l'éclatement de 5 0 %.

Le tube avec les bandes soudées obtenu n'étant composé que d'un seul type de résine, comprenant localement du noir de carbone, on peut facilement recycler les chutes de fabrication vers le processus de fabrication de l'âme tubulaire.

## Revendications

1. - Procédé d'assemblage de bandes multicouches, comprenant le soudage des bandes à l'aide d'un rayonnement électromagnétique, chaque bande comprenant au moins une couche en matière plastique, orientée dans au moins une direction, et transparente à ce rayonnement,
une face d'au moins une bande de l'assemblage étant soudée sur un support préformé en matière plastique,
chaque bande comprenant au moins une autre couche absorbant partiellement l'énergie transportée par ce rayonnement.

2. - Procédé selon la revendication précédente, **caractérisé en ce qu'**on soude au moins deux bandes.

3. - Procédé selon une quelconque des revendications précédentes,
**caractérisé en ce qu'**au moins une couche de la matière plastique des bandes est orientée dans une seule direction.

4. - Procédé selon une quelconque des revendications précédentes,
**caractérisé en ce que** le rayonnement électromagnétique a une longueur d'onde allant de 700 à 1200 nm.

5. - Procédé selon une quelconque des revendications précédentes,
**caractérisé en ce que** le rayonnement électromagnétique est un rayonnement laser.

6. - Procédé selon une quelconque des revendications précédentes,
**caractérisé en ce que** le support préformé en matière plastique est un support tubulaire en matière plastique non orientée.

7. - Procédé selon une quelconque des revendications précédentes,
**caractérisé en ce que** la matière responsable de l'absorption du rayonnement électromagnétique est du noir de carbone.

8. - Tube composite en matière plastique comprenant une âme en matière plastique non orientée, sur laquelle est soudée au moins deux épaisseurs adjacentes de bandes multicouches enroulées et soudées entre elles,
**caractérisé en ce qu'**au moins une couche de chaque bande est constituée d'une matière plastique transparente aux rayonnements électromagnétiques et orientée dans au moins une direction et **en ce qu'**au moins une autre couche de chaque bande comprend une matière absorbant ces rayonnements électromagnétiques.

9. - Tube selon la revendication précédente,
**caractérisé en ce que** les couches comprenant de la matière absorbante sont aussi orientées.

10. - Tube selon la revendication précédente,
**caractérisé en ce que** les bandes sont constituées d'une couche de matière orientée, transparente au rayonnement électromagnétique de longueur d'onde allant de 700 à 1200 nm et située entre deux couches plus minces comprenant la même matière plastique orientée dans la même direction que la couche transparente et comprenant en outre une matière absorbant ce rayonnement.

## Claims

1. A method of assembling multilayer strips comprising the welding of the strips by using electromagnetic radiation, each strip comprising at least one layer in a plastic material, oriented in at least one direction and transparent to this radiation,
one face of at least one strip of the assembly being welded onto a preformed support in a plastic material,
each strip comprising at least one other layer partially absorbing the energy transported by this radiation.

2. The method according to the previous claim, **characterized in that** at least two strips are welded.

3. The method according to any one of the previous claims, **characterized in that** at least one layer of the plastic material of the strips is oriented in a single direction.

4. The method according to any one of the previous claims, **characterized in that** the electromagnetic radiation has a wavelength ranging from 700 to 1200 nm.

5. The method according to any one of the previous claims, **characterized in that** the electromagnetic radiation is laser radiation.

6. The method according to any one of the previous claims, **characterized in that** the preformed support in plastic material is a tubular support in a non-oriented plastic material.

7. The method according to any one of the previous claims, **characterized in that** the material responsible for the absorption of the electromagnetic radiation is carbon black.

8. A composite tube in a plastic material comprising a core in a non-oriented plastic material on which at least two adjacent thicknesses of multilayer strips that are wound and welded between each other are welded,
**characterized in that** at least one layer of each strip is constituted of a plastic material transparent to the electromagnetic radiation and oriented in at least one direction and **in that** at least one other layer of each band comprises a material absorbing this electromagnetic radiation.

9. The tube according to the previous claim, **characterized in that** the layers comprising the absorbent material are also oriented.

10. The tube according to the previous claim, **characterized in that** the strips are constituted of a layer of oriented material, transparent to the electromagnetic radiation of wavelength ranging from 700 to 1200 nm and situated between two thinner layers comprising the same plastic material oriented in the same direction as the transparent layer and also comprising a material absorbing this radiation.

## Patentansprüche

1. Verfahren zum Zusammenfügen vielschichtiger Bänder, umfassend das Verschweißen der Bänder mit Hilfe elektromagnetischer Strahlung, wobei jedes Band wenigstens eine Schicht aus Kunststoff umfasst, die in wenigstens einer Richtung orientiert ist und für diese Strahlung transparent ist,
wobei eine Seite wenigstens eines Bandes auf einen vorgeformten Träger aus Kunststoff aufgeschweißt wird,
wobei jedes Band wenigstens eine weitere Schicht umfasst, die partiell die mittels dieser Strahlung transportierte Energie absorbiert.

2. Verfahren nach dem vorhergehenden Anspruch, **dadurch gekennzeichnet, dass** man wenigstens zwei Bänder aufschweißt.

3. Verfahren nach einem der vorhergehenden Ansprüche,
**dadurch gekennzeichnet, dass** wenigstens eine Schicht des Kunststoffs der Bänder in nur einer Richtung orientiert ist.

4. Verfahren nach einem der vorhergehenden Ansprüche,
**dadurch gekennzeichnet, dass** die elektromagnetische Strahlung eine Wellenlänge von 700 bis 1200 nm aufweist.

5. Verfahren nach einem der vorhergehenden Ansprüche,
**dadurch gekennzeichnet, dass** die elektromagnetische Strahlung eine Laserstrahlung ist.

6. Verfahren nach einem der vorhergehenden Ansprüche,
**dadurch gekennzeichnet, dass** der vorgeformte Träger aus Kunststoff ein rohrförmiger Träger ist nicht orientiertem Kunststoff ist.

7. Verfahren nach einem der vorhergehenden Ansprüche,
**dadurch gekennzeichnet, dass** der Stoff, welcher für die Absorption der elektromagnetischen Strahlung verantwortlich ist, Ruß ist.

8. Verbundrohr aus Kunststoff umfassend einen Kern aus nicht orientiertem Kunststoff, auf den wenigstens zwei benachbarte Schichtdicken von mehrschichtigen Bändern aufgewickelt und miteinander verschweißt werden, **dadurch gekennzeichnet, dass** wenigstens eine Schicht jedes Bandes aus einem Kunststoff besteht, der transparent für elektromagnetische Strahlung ist und in wenigstens einer Richtung orientiert ist und dass wenigstens eine weitere Schicht jedes Bandes einen diese elektromagnetische Strahlung absorbierenden Stoff enthält.

9. Rohr nach dem vorhergehenden Anspruch,
**dadurch gekennzeichnet, dass** die den absorbierenden Stoff enthaltenden Schichten auch orientiert sind.

10. Rohr nach dem vorhergehenden Anspruch,
**dadurch gekennzeichnet, dass** die Bänder aus einer Schicht eines orientierten Materials bestehen, welche für eine elektromagnetische Strahlung mit einer Wellenlänge von 700 bis 1200 nm transparent ist und zwischen zwei dünnen Schichten angeordnet ist, die den gleichen Kunststoff enthalten, welcher in der gleichen Richtung orientiert ist, wie die transparente Schicht und welche im Übrigen einen diese Strahlung absorbierenden Stoff enthalten.
